# FASCICULE DE BREVET EUROPEEN

(11) **EP 0 875 489 B1**
(45) Date de publication et mention de la délivrance du brevet: **19.03.2003**
(21) Numéro de dépôt: 98401067.8
(22) Date de dépôt: 30.04.1998
(51) Int. Cl.: C03B 37/012

(54) **Procédé et appareil de fabrication de préformes de fibre de verre**
Verfahren und Vorrichtung zum Herstellen von Vorformen für Glasfasern
Process and apparatus for producing preforms for glass fibres

(30) Priorité: 02.05.1997 FR 9705446
(43) Date de publication de la demande: 04.11.1998
(73) Titulaire: ALCATEL, 75008 Paris (FR)
(72) Inventeur: Drouart, Alain, 92000 Nanterre (FR); Gouez, Benoît, 78260 Acheres (FR); Ripoche, Pierre, 45300 Pithiviers (FR)
(74) Mandataire: Laroche, Danièle

(56) Documents cités:
- EP-A- 0 719 738
- FR-A- 2 446 264
- GB-A- 2 134 896

## Description

L'invention concerne la fabrication des préformes de fibre de verre et en particulier de fibres optiques, et elle concerne en particulier un procédé et un appareil qui permettent notamment une augmentation du débit de fabrication de ces préformes.

Le document FR-A-2 253 723 décrit un procédé de préparation d'une préforme pour guide d'onde optique dans lequel un chalumeau à plasma projette une poudre de verre qui est introduite au pied de la flamme par un gaz porteur. Un courant de gaz porteur est créé afin qu'il déplace la poudre de verre le long d'un trajet allongé sensiblement horizontal. Plus précisément, en l'absence de gaz porteur, la poudre de verre ne progresse pas vers le chalumeau à plasma si bien que la flamme de plasma ne contient pas de poudre de verre. Il s'agit d'un procédé d'injection pneumatique de poudre de verre.

On connaît aussi, d'après le document GB-A-2 134 896, un procédé de fabrication d'une préforme qui se rapproche du procédé du premier document précité. En effet, une poudre de verre de silice, en quantité dosée mécaniquement, est introduite dans un tube central dans lequel sont introduits successivement de l'oxygène et de l'hydrogène destinés à former une flamme de chalumeau oxhydrique, si bien que la poudre est introduite dans ce chalumeau avant même qu'il ne forme la flamme. Ce procédé comporte donc une injection de la poudre de verre en amont du pied de la flamme et par l'intérieur de celle-ci.

Le document FR-A-2 446 264 décrit un procédé de préparation d'une préforme pour guide d'onde optique dans lequel une préforme cylindrique de section circulaire est déplacée suivant son axe devant la flamme d'un chalumeau à plasma, cette flamme étant orientée horizontalement. Un conduit d'alimentation, ayant un tronçon inférieur incliné, introduit sous l'action de la pesanteur une poudre de verre de silice au-dessus de la flamme afin que la poudre soit entraînée par la flamme sur la préforme. Cependant, bien que ce document indique que le chalumeau à plasma puisse avoir plusieurs orientations dans un plan vertical perpendiculaire à l'axe de rotation de la préforme, la description indique que les grains de verre "tombent" dans la flamme du plasma, si bien que la flamme du plasma doit avoir une composante importante en direction horizontale.

La disposition décrite dans ce document FR-A-2 446 264 est plus simple que celles des documents précédents parce que les opérations de transport de la poudre de verre et de formation de la flamme de plasma sont totalement dissociées et parce que l'alimentation en poudre de verre est réalisée uniquement sous l'action de la pesanteur.

L'invention concerne de façon générale un procédé du type décrit dans le document précité FR-A-2 446 264 en ce qu'il met en oeuvre une flamme de plasma dirigée vers une préforme, et un dispositif séparé d'alimentation en poudre par gravité. Cependant, dans le procédé de l'invention, l'introduction de la poudre de verre par gravité ne s'effectue normalement qu'au bord de la flamme de plasma. Dans un tel procédé, la quantité de la poudre de verre qui est introduite dans le plasma et déposée sur la préforme primaire est limitée par la profondeur de pénétration de la poudre dans la flamme de plasma.

Selon l'invention, l'inconvénient dû à la limitation de la profondeur de pénétration de la poudre dans la flamme de plasma est supprimé ou au moins fortement réduit par mise à disposition d'un procédé et d'un appareil avec lesquels le débit de fabrication de préformes de verre dans un système à alimentation par gravité et à flamme de plasma est accru par renforcement de l'alimentation par gravité par une accélération de la poudre de verre avant qu'elle ne pénètre dans la flamme. Cette accélération est obtenue par utilisation d'un gaz accélérateur de la poudre dans la partie terminale du dispositif d'alimentation.

Plus précisément, l'invention concerne un procédé de fabrication de préformes de fibre de verre, du type qui comprend le déplacement en rotation d'une préforme cylindrique primaire autour de son axe, le déplacement relatif en translation de la préforme et d'un chalumeau à plasma, en direction parallèle à l'axe de la préforme, l'axe de la flamme de plasma ne recoupant pas l'axe de la préforme et étant décalé d'une certaine distance par rapport à l'axe de la préforme, et l'introduction d'une poudre de verre par gravité dans la flamme de plasma, depuis l'extérieur de la flamme ; selon l'invention, le procédé comprend l'accélération de la poudre de verre introduite par gravité avant qu'elle ne pénètre dans la flamme du plasma, à l'aide d'un gaz accélérateur introduit dans le courant de poudre de verre progressant par gravité, et le réglage de la distance de décalage entre l'axe de la flamme du plasma et l'axe de la préforme afin que la distance de décalage des axes soit réduite lorsque l'accélération de la poudre est accrue.

De préférence, le réglage de l'accélération est effectué par réglage du débit du gaz accélérateur, à une valeur qui peut atteindre 15 l/min, et le débit de poudre de verre peut atteindre 90 g/min.

Il est avantageux que le procédé comprenne, avant l'introduction du gaz accélérateur dans le courant de poudre de verre, un traitement préparatoire du gaz accélérateur. Ce traitement préparatoire du gaz accélérateur peut être notamment le préchauffage de ce gaz accélérateur, et/ou l'introduction d'une matière de dopage dans le gaz accélérateur.

L'invention concerne aussi un appareil de fabrication de préformes de fibre de verre, du type qui comprend un chalumeau à plasma, un dispositif de déplacement relatif en translation d'une préforme primaire et de la flamme du chalumeau à plasma, et un dispositif d'alimentation en poudre de verre de la flamme du plasma par gravité, depuis l'extérieur de cette flamme ; selon l'invention, le dispositif d'alimentation par gravité comporte un tronçon inférieur de tube en amont duquel se raccorde un tube d'injection de gaz d'accélération.

L'appareil comporte en outre un dispositif de réglage de la distance comprise entre l'axe de la flamme de plasma du chalumeau et l'axe d'une préforme primaire sur laquelle est formée la préforme de fibre de verre.

De préférence, l'axe du tube d'injection du gaz d'accélération et l'axe du tronçon inférieur du dispositif d'alimentation forment un angle qui est inférieur ou égal à 30°.

Il est avantageux que l'appareil comporte en outre un dispositif de réglage du débit du gaz d'accélération.

Dans un mode de réalisation avantageux, l'appareil comporte en outre, avant le tube d'injection du gaz accélérateur dans le courant de poudre de verre, un dispositif de traitement préparatoire du gaz accélérateur. Le dispositif de traitement préparatoire du gaz accélérateur est avantageusement un dispositif de préchauffage du gaz accélérateur et/ou un dispositif d'introduction d'une matière de dopage dans le gaz accélérateur. De préférence, le gaz accélérateur est l'air.

D'autres caractéristiques et avantages de l'invention ressortiront mieux de la description qui va suivre, faite en référence aux dessins annexés sur lesquels :
la figure 1 est une vue schématique en élévation latérale représentant un appareil de fabrication d'une préforme de fibre de verre par un procédé à alimentation par gravité en poudre de verre d'une flamme de plasma ;
la figure 2 est une vue de bout de l'appareil représenté sur la figure 1 ; et
la figure 3 est une coupe schématique d'un dispositif utile pour la mise en oeuvre du procédé de l'invention.

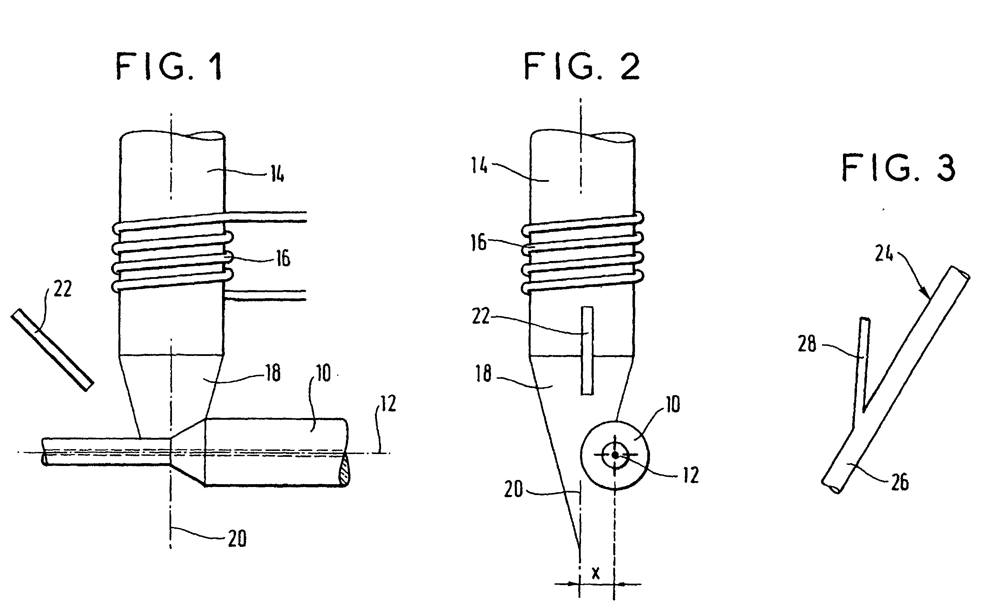

Les figures 1 et 2 représentent un appareil de fabrication de préformes de fibre de verre qui peut être utilisé dans un procédé de fabrication de préformes à alimentation par gravité du type à chalumeau plasma. Plus précisément, la préforme de fibre de verre 10 est réalisée sur une préforme primaire de forme cylindrique de section circulaire qui tourne autour de son axe 12 et qui se déplace parallèlement à son axe, de gauche à droite sur la figure 1. Au niveau d'un chalumeau à plasma 14 qui comporte un tube entouré d'un enroulement 16 de chauffage par induction, une flamme 18 de plasma est projetée vers la préforme 10. La flamme de plasma a un axe 20.

Une poudre de verre, ayant une dimension particulaire par exemple de l'ordre de 0,1 à 0,2 mm, est introduite par gravité par un tube 22 depuis l'extérieur de la flamme 18 de plasma au-dessus de la préforme 10. Les grains de poudre qui pénètrent dans la flamme sont fondus et appliqués sur la préforme dont le diamètre augmente.

On note sur la figure 2 que l'axe 20 de la flamme est décalé par rapport à l'axe 12 de la préforme, les deux axes étant séparés par une distance désignée par la référence x sur la figure 2.

L'appareil qu'on vient de décrire, lorsqu'il est utilisé sans le perfectionnement de l'invention, permet l'application d'environ 30 g/min de poudre de verre au maximum avec une puissance de chalumeau à plasma de 40 à 100 kW.

L'invention concerne un perfectionnement apporté au procédé et à l'appareil précité tel que le débit de fabrication de préformes peut être augmenté de deux à trois fois au moins.

A cet effet, dans le cas de l'appareil décrit en référence aux figures 1 et 2, la poudre de verre introduite par gravité dans la flamme de plasma est accélérée afin qu'elle pénètre plus profondément dans la flamme et ainsi qu'une plus grande quantité de poudre puisse être fondue simultanément dans la flamme du plasma et appliquée sur la préforme 10. Il ne suffit pas, pour obtenir un tel résultat, d'augmenter simplement le débit de poudre, puisque la poudre ne pénétrerait pas suffisamment dans la flamme. Il ne suffit pas non plus, pour obtenir un tel résultat, d'utiliser un système de projection pneumatique de poudre en quantité voulue dans la flamme, en direction latérale, car une telle réalisation introduirait une trop grande quantité de gaz porteur de la poudre et provoquerait un refroidissement excessif de la flamme et donc une réduction de son effet, avec éventuellement création de défauts sur la préforme.

L'invention met donc en oeuvre une alimentation par simple accélération de la poudre alimentée par gravité qui permet l'obtention d'un débit élevé à un état de régime permanent, et non une alimentation par projection pneumatique de poudre qui introduit une perturbation importante de la flamme de plasma et rend très délicate l'obtention d'un état de régime permanent.

On a constaté en outre qu'il ne suffisait pas d'introduire dans la flamme du plasma une plus grande quantité de poudre accélérée par un gaz pour obtenir un état de régime permanent permettant une croissance régulière d'une préforme, mais qu'il fallait aussi régler la position de la flamme du plasma par rapport à la préforme en fonction de la quantité de poudre introduite.

Plus précisément, comme l'indique la figure 2, on a mesuré la distance x entre l'axe 20 de la flamme de plasma et l'axe 12 de la préforme 10 à un état de régime permanent d'une part dans le cas d'une alimentation en poudre uniquement par gravité (espacement x₀) et d'autre part dans le cas d'une accélération par un gaz du courant de poudre de verre avec, en conséquence, augmentation du débit. On s'est rendu compte que la distance x entre les axes 20 et 12 était d'autant plus petite que la vitesse d'accélération de la poudre était accrue. Cependant, il ne faut pas que l'accélération atteigne une valeur telle que le gaz accélérateur donne un effet mécanique et de refroidissement de la flamme qui est excessif et empêche l'obtention d'une préforme 10 de qualité.

Selon l'invention, l'accélération du courant de poudre de verre est de préférence réalisée dans le tronçon inférieur 26 du tube habituel 24 d'alimentation par gravité, par injection d'un gaz accélérateur, par exemple de l'air ou de l'argon, par un conduit latéral 28. Ce conduit latéral 28 fait, de préférence, un petit angle avec le conduit normal 24, inférieur à 30°. En effet, il est avantageux d'utiliser l'énergie cinétique du gaz, en plus de son effet de surpression.

Dans un exemple de mise en oeuvre de l'invention avec l'appareil décrit, on a obtenu un débit de poudre de verre atteignant 90 g/min, avec un débit d'air accélérateur de 15 l/min au maximum, pour une même puissance du chalumeau à plasma.

Selon l'invention, la distance x séparant les axes 12 et 20 est donc réglée en fonction de la quantité de poudre de verre introduite. L'appareil comprend, comme dispositif destiné à faire varier cette distance x, un dispositif déjà connu à cet effet, par exemple des rails sur lesquels peuvent rouler des roues de l'ensemble de support de la préforme sous la commande d'un moteur.

Il est en outre nécessaire que le gaz accélérateur possède des propriétés convenables. Lorsque la matière appliquée est une poudre de verre de silice, l'air convient parfaitement, mais d'autres gaz peuvent être utilisés, tels que des gaz inertes. Il est cependant nécessaire que le gaz accélérateur utilisé ait la pureté nécessaire à l'obtention d'une préforme de verre non contaminée, ou contenant uniquement l'impureté ou les impuretés de dopage nécessaires.

Selon l'invention, il est aussi avantageux que le gaz accélérateur de la poudre de verre ait aussi un rôle de préparation de la poudre elle-même afin que la fabrication de la préforme soit plus facile. Par exemple, le gaz accélérateur peut subir un traitement qui peut être un chauffage, afin qu'il provoque un préchauffage de la poudre de verre. Le chauffage du gaz est par exemple réalisé par passage dans un échangeur de chaleur. Dans un autre exemple, le gaz accélérateur contient une matière de dopage qui dépend de la qualité de la couche de verre qui doit être formée sur la préforme 10. Il est en effet fréquent que la préforme soit utilisée pour la fabrication de fibres à variation progressive d'indice de réfraction. Il faut alors que la préforme reçoive, avec des étirages intermédiaires éventuels, des couches dont les indices de réfraction sont différents. Selon l'invention, cette variation d'indice peut être obtenue par modification de la composition du gaz accélérateur ; par exemple, le gaz peut par exemple avoir une concentration variable d'un composé halogéné.

Les dispositifs incorporés à l'appareil selon l'invention peuvent être réalisés de la même manière que les dispositifs ayant la même fonction dans les appareils connus. Par exemple, le dispositif d'alimentation gravimétrique peut comprendre un distributeur classique, le chalumeau à plasma peut être d'un type déjà connu dans cette application, etc.

En fin, la granulométrie des poudres utilisées peut être la même que celle qui est habituellement utilisée ; par exemple, les particules ont une dimension de l'ordre de quelques dixièmes de millimètre, par exemple de 0,1 à 0,2 mm.

Il est bien entendu que l'invention n'a été décrite et représentée qu'à titre d'exemple préférentiel et qu'on pourra apporter toute équivalence technique dans ses éléments constitutifs sans pour autant sortir de son cadre.

## Revendications

1. Procédé de fabrication de préformes de fibre de verre et en particulier de fibres optiques, du type qui comprend :
- le déplacement en rotation d'une préforme cylindrique primaire autour de son axe,
- le déplacement relatif en translation de la préforme (10) et d'un chalumeau à plasma (14), en direction parallèle à l'axe (12) de la préforme (10), et
- l'introduction d'une poudre de verre par gravité dans la flamme de plasma (18), depuis l'extérieur de la flamme,
**caractérisé en ce que** l'axe (20) de la flamme de plasma (18) ne recoupant pas l'axe (12) de la préforme (10) et étant décalé d'une certaine distance (x) par rapport à l'axe (12) de la préforme (10) et qu'il comprend
- l'accélération de la poudre de verre introduite par gravité avant qu'elle ne pénètre dans la flamme du plasma (18), à l'aide d'un gaz accélérateur introduit dans le courant de poudre de verre progressant par gravité, et
- le réglage de la distance (x) de décalage entre l'axe (20) de la flamme du plasma (18) et l'axe (12) de la préforme (10) afin que la distance (x) de décalage des axes (12, 20) soit réduite lorsque l'accélération de la poudre est accrue.

2. Procédé selon la revendication 1, **caractérisé en ce qu'**il comprend le réglage de l'accélération par réglage du débit du gaz accélérateur à une valeur inférieure ou égale à 15 l/mn, la quantité de poudre de verre pouvant atteindre 90 g/mn.

3. Procédé selon l'une des revendications 1 et 2, **caractérisé en ce que** le procédé comprend, avant l'introduction du gaz accélérateur dans le courant de poudre de verre, un traitement préparatoire du gaz accélérateur.

4. Procédé selon la revendication 3, **caractérisé en ce que** le traitement préparatoire du gaz accélérateur comprend le préchauffage de ce gaz accélérateur.

5. Procédé selon la revendication 3, **caractérisé en ce que** le traitement préparatoire du gaz accélérateur comprend l'introduction d'une matière de dopage dans le gaz.

6. Appareil de fabrication de préformes de fibre de verre, du type qui comprend un chalumeau à plasma (14), un dispositif de déplacement relatif en translation d'une préforme primaire et de la flamme (18) du chalumeau à plasma (14), et un dispositif (24) d'alimentation en poudre de verre de la flamme de plasma (18) par gravité, depuis l'extérieur de cette flamme, **caractérisé en ce que** le dispositif (24) d'alimentation par gravité comporte un tronçon inférieur (26) de tube en amont duquel se raccorde un tube (28) d'injection d'un gaz d'accélération et qu'il comporte en outre un dispositif de réglage de la distance (x) comprise entre l'axe (20) de la flamme de plasma (18) du chalumeau et l'axe (12) de ladite préforme primaire sur laquelle est formée la préforme (10) de fibre de verre.

7. Appareil selon la revendication 6, **caractérisé en ce que** l'axe du tube (28) d'injection du gaz d'accélération et l'axe du tronçon inférieur (26) du dispositif d'alimentation forment un angle qui est inférieur ou égal à 30°.

8. Appareil selon l'une des revendications 6 et 7, **caractérisé en ce qu'**il comporte en outre, avant le tube (28) d'injection du gaz accélérateur dans le courant de poudre de verre, un dispositif de traitement préparatoire du gaz accélérateur.

9. Appareil selon la revendication 8, **caractérisé en ce que** le dispositif de traitement préparatoire du gaz accélérateur est choisi dans le groupe qui comprend un dispositif de préchauffage du gaz accélérateur et un dispositif d'introduction d'une matière de dopage dans le gaz accélérateur.

## Patentansprüche

1. Verfahren zur Herstellung von Glasfaser-Vorformen und insbesondere von Lichtwellenleiter-Vorformen des Typs, der folgendes umfaßt:
- rotatorische Verschiebung einer ersten zylindrischen Vorform um ihre Achse,
- relative translatorische Verschiebung der Vorform (10) und eines Plasmabrenners (14) parallel zur Achse (12) der Vorform (10), und
- Einbringen eines Glaspulvers durch Schwerkraft in die Plasmaflamme (18) bis zum Äußeren der Flamme, **dadurch gekennzeichnet, daß** sich die Achse (20) der Plasmaflamme (18) nicht mit der Achse (12) der Vorform (10) überschneidet und um einen bestimmten Abstand (x) bezüglich der Achse (12) der Vorform (10) verschoben ist, und dadurch, daß folgendes eingeschlossen ist:
- Beschleunigung des durch Schwerkraft eingebrachten Glaspulvers vor seinem Eindringen in die Plasmaflamme (18) mit Hilfe eines Beschleunigergases, das in den Strom des durch die Schwerkraft vorwärts bewegten Glaspulvers eingeleitet wird, und
- Regelung des Abstands (x) der Verschiebung zwischen Achse (20) der Plasmaflamme (18) und Achse (12) der Vorform (10), damit der Abstand (x) der Verschiebung der Achsen (12, 20) bei zunehmender Beschleunigung des Pulvers vermindert wird.

2. Verfahren nach Anspruch 1, **dadurch gekennzeichnet, daß** es die Regelung der Beschleunigung über die Regelung des Ausstoßes des Beschleunigergases auf einen Wert von kleiner oder gleich 15 l/min umfaßt, wobei die Menge an Glaspulver 90 g/min erreichen kann.

3. Verfahren nach einem der Ansprüche 1 und 2, **dadurch gekennzeichnet, daß** das Verfahren vor dem Einleiten des Beschleunigergases in den Glaspulverstrom eine Vorbehandlung des Beschleunigergases umfaßt.

4. Verfahren nach Anspruch 3, **dadurch gekennzeichnet, daß** die Vorbehandlung des Beschleunigergases das Vorheizen dieses Beschleunigergases umfaßt.

5. Verfahren nach Anspruch 3, **dadurch gekennzeichnet, daß** die Vorbehandlung des Beschleunigergases das Einbringen einer Dotierungssubstanz in das Gas umfaßt.

6. Gerät zur Herstellung von Glasfaser-Vorformen des Typs, der einen Plasmabrenner (14), eine Vorrichtung zur relativen translatorischen Verschiebung einer ersten Vorform und der Flamme (18) des Plasmabrenners (14), und eine Zuführvorrichtung (24) für Glaspulver in die Plasmaflamme (18) durch Schwerkraft bis zum Äußeren dieser Flamme umfaßt, **dadurch gekennzeichnet, daß** die Schwerkraft-Zuführvorrichtung (24) einen unteren Rohrabschnitt (26) aufweist, dem ein Einleitungsrohr (28) für ein Beschleunigungsgas vorgeschaltet ist, und dadurch, daß sie ferner eine Regelungsvorrichtung für den Abstand (x) zwischen Achse (20) der Plasmaflamme (18) des Brenners und Achse (12) der ersten Vorform, mit der die Vorform (10) von Glasfaser geformt wird, aufweist.

7. Gerät nach Anspruch 6, **dadurch gekennzeichnet, daß** die Achse (28) des Einleitungsrohrs für das Beschleunigungsgas und die Achse des unteren Rohrabschnitts (26) der Zuführvorrichtung einen Winkel bilden, der kleiner oder gleich 30° beträgt.

8. Gerät nach einem der Ansprüche 6 und 7, **dadurch gekennzeichnet, daß** es ferner vor dem Rohr 28 zur Einleitung des Beschleunigungsgases in den Glaspulverstrom eine Vorrichtung zur Vorbehandlung des Beschleunigergases aufweist.

9. Gerät nach Anspruch 8, **dadurch gekennzeichnet, daß** die Vorbehandlung des Beschleunigergases aus der Gruppe ausgewählt ist, die eine Vorheizvorrichtung für Beschleunigergas und eine Einführvorrichtung für eine Dotierungssubstanz in das Beschleunigergas umfaßt.

## Claims

1. A method of manufacturing glass fiber preforms, and in particular optical fiber preforms, the method being of the type which comprises:
· rotating a cylindrical primary preform about its axis;
· moving a plasma torch (14) in translation relative to the preform (10) in a direction parallel to the axis (12) of the preform (10); and
· inserting glass powder by gravity into the plasma flame (18) from outside the flame;
the method being **characterized in that** the axis (20) of the plasma torch flame (18) does not intersect the axis (12) of the preform (10) and is offset by a certain distance (x) from the axis (12) of the preform (10), and **in that** it comprises:
· accelerating the glass powder inserted under gravity before it penetrates into the plasma flame (18) by means of an accelerator gas inserted into the flow of glass powder advancing under gravity; and
· adjusting the offset distance (x) between the axis (20) of the plasma flame (18) and the axis (12) of the preform (10) so that the offset distance (x) between the axes (12, 20) is decreased as the acceleration of the powder is increased.

2. A method according to claim 1, **characterized in that** it includes adjusting the acceleration by adjusting the flow rate of the accelerator gas to a value that is smaller than or equal to 15 l/min, with the quantity of glass powder possibly achieving 90 g/min.

3. A method according to claim 1 or 2, **characterized in that** the method comprises, prior to insertion of the accelerator gas into the flow of glass powder, preparatory treatment of the accelerator gas.

4. A method according to claim 3, **characterized in that** the preparatory treatment of the accelerator gas comprises preheating the accelerator gas.

5. A method according to claim 3, **characterized in that** the preparatory treatment of the accelerator gas comprises inserting doping matter into the gas.

6. Apparatus for manufacturing glass fiber preforms, the apparatus being of the type comprising a plasma torch (14), a device for imparting relative displacement in translation between a primary preform and the flame (18) of the plasma torch (14), and a device (24) for feeding the plasma flame (18) under gravity with glass powder from outside said flame, the apparatus being **characterized in that** the gravity feed device (24) includes a bottom length (26) of a tube having an accelerator gas injection tube (28) connected upstream therefrom, and **in that** it further comprises a device for adjusting the distance (x) between the axis (20) of the plasma flame (18) of the torch and the axis (12) of said primary preform on which the glass fiber preform (10) is formed.

7. Apparatus according to claim 6, **characterized in that** the axis of the accelerator gas injection tube (28) and the axis of the bottom length (26) of the feed device form an angle that is less than or equal to 30°.

8. Apparatus according to claim 6 or 7, **characterized in that** it further includes a device for performing preparatory treatment to the accelerator gas prior to the tube (28) for injecting the accelerator gas into the flow of glass powder.

9. Apparatus according to claim 8, **characterized in that** the device for preparatory treatment of the accelerator gas is selected from the group comprising a device for preheating the accelerator gas and a device for inserting a doping material into the accelerator gas.
